# EUROPÄISCHE PATENTSCHRIFT

(11) **EP 1 979 118 B1**
(45) Veröffentlichungstag und Bekanntmachung des Hinweises auf die Patenterteilung: **27.10.2010**
(21) Anmeldenummer: 07703668.9
(22) Anmeldetag: 05.01.2007
(51) Int. Cl.: B23B 27/16

(54) **FORMSCHLÜSSIG BEFESTIGTE SCHNEIDPLATTE AUF EINER STÜTZPLATTE**
CUTTING PLATE SECURED BY INTERLOCK ON A SUPPORT PLATE
PLAQUE DE COUPE FIXEE EN CORRESPONDANCE GEOMETRIQUE SUR UNE PLAQUE D'APPUI

(30) Priorität: 09.01.2006 DE 102006001309; 07.11.2006 DE 102006052701
(43) Veröffentlichungstag der Anmeldung: 15.10.2008
(73) Patentinhaber: CeramTec AG, 73207 Plochingen (DE)
(72) Erfinder: KABELITZ, Jörg, 73776 Altbach (DE); SCHUMACHER, Hans-Peter, 66287 Quierschied (DE); KVITTA, Manfred, 73061 Ebersbach (DE); KVITTA, Ralph, 73061 Ebersbach (DE); EDER, Otto, 73257 Köngen (DE)
(74) Vertreter: Scherzberg, Andreas Hans
(86) Internationale Anmeldenummer: PCT/EP2007/050110
(87) Internationale Veröffentlichungsnummer: WO 2007/080151

(56) Entgegenhaltungen:
- EP-A- 0 094 537
- EP-A- 0 568 515
- WO-A-99/15297
- DE-A1- 10 113 633
- US-A- 3 060 554
- US-A- 3 303 553
- US-A- 4 077 735

## Beschreibung

Die Erfindung betrifft ein Schneidwerkzeug zur spanabhebenden Bearbeitung nach dem Oberbegriff des Anspruchs 1 wie dies beispielweise aus der US 4 077 735 bekannt ist.

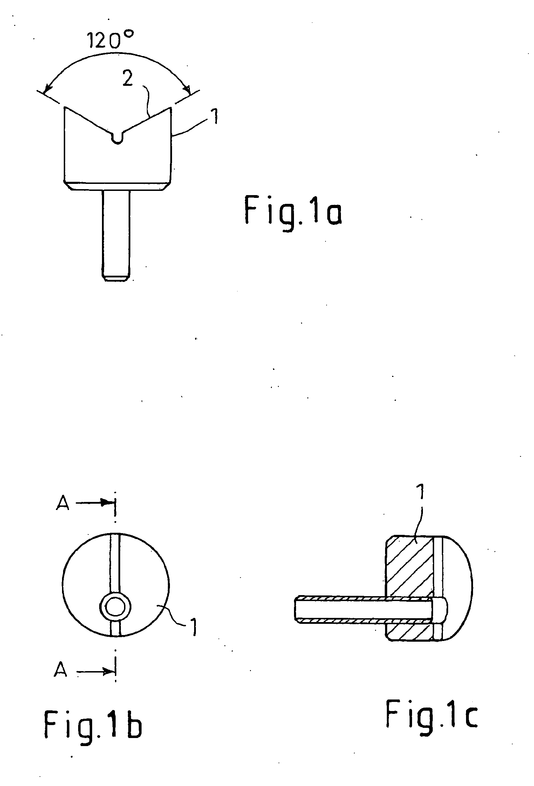

Figur 1 a, b, c zeigt eine Stützplatte 1 nach dem Stand der Technik, hier zur Aufnahme von Rundschneidplatten. Die Stützplatte 1 ist hierbei mit einem 120 Grad Prisma 2 versehen, in welches eine hier nicht gezeigte Schneidplatte eingesetzt wird (siehe hierzu EP 0 350 938 A1).

Bei einer Schneidplattendicke von z. B. 4,76 mm ist die Schneidplatte am Auslauf des Prismas sehr dünn. Außerdem führen die Toleranzen der Schneidplatte zur Stützplatte zu ungenauer Positionierung. Dadurch ist kein ausreichender Plattensitz gewährleistet. Dieses gilt im Augenblick besonders für CBN Schneidplatten, d. h. Schneidplatten aus kubischen Bornitrid.

Der Erfindung liegt die Aufgabe zugrunde, ein Schneidwerkzeug nach dem Oberbegriff des Anspruchs 1 anzugeben, bei dem die Befestigung der Schneidplatte auf dem Schneidwerkzeug wesentlich verbessert ist.

Erfindungsgemäß wird diese Aufgabe durch die Merkmale des Anspruchs 1 gelöst.

Dadurch, dass die Schneidplatte über eine formschlüssige Nut-Feder-Verbindung auf der Stützplatte aufsitzt, ist die Befestigung wesentlich verbessert.

In erfindungsgemäßer Ausgestaltung weist die Schneidplatte auf ihrer zur Stützplatte gewandten Unterseite eine Nut auf, in die eine Passfeder formschlüssig eingreift, die entweder einstückig mit der Stützplatte ausgebildet ist oder in oder an dieser befestigt ist.

Die zur Schneidplatte gewandte Oberseite der Stützplatte weist vorteilhaft einen Schlitz auf, in den die Passfeder als eigenständiges Bauteil formschlüssig eingesetzt ist.

Bevorzugt besteht die Passfeder aus einer Keramik.

In einer Ausgestaltung weist die Schneidplatte auf der zur Stützplatte gewandten Unterseite eine erhabene Passfeder auf, die in eine entsprechende Nut auf der zur Schneidplatte gewandten Oberseite der Stützplatte formschlüssig eingreift.

Die Stützplatte ist über eine Schraube auf dem Klemmhalter befestigt, wobei durch Festdrehen der Schraube die Stützplatte in ihren Plattensitz in der Ausnehmung gezogen wird.

In einer Ausgestaltung weist die Stützplatte auf ihrer zum Klemmhalter gewandten Unterseite einen Steg auf, der in eine entsprechende Nut im Klemmhalter eingreift oder umgekehrt.

Vorteilhaft ist die Nut auf der Unterseite der Schneidplatte durchgängig ausgebildet. Das Material der Schneidplatte besteht bevorzugt aus einer Keramik. Es kann auch ein kubisches Bornitrid CBN oder ein Metall sein.

Durch das erfindungsgemäße Einbringen einer formschlüssigen Nut-Feder Verbindung zwischen Schneidplatte und Stützplatte ist, aufgrund der plangeschliffenen Schneidplatte und der Führung in der Feder, ein besserer Plattensitz gewährleistet. Dadurch dass die Stützplatte von vorne geschraubt wird, kann der Nutenkeil auch in Keramik ausgelegt werden, was aufgrund der entstehenden Wärme bei der Zerspanung weniger Verzug im Halter bedeutet.

Nachfolgend wird die Erfindung anhand von Figuren näher erläutert.

Die Figuren 2 a, b, c, zeigen einen Klemmhalter 3 mit einer Ausnehmung 4 zur Aufnahme einer Stützplatte 5. Die Stützplatte 5 selbst zeigen die Figuren 3 a, b, c, d. Die Figuren 4 a, b, c zeigen die zugehörige Passfeder 9 und Figur 5 zeigt eine erfindungsgemäße Schneidplatte 6.

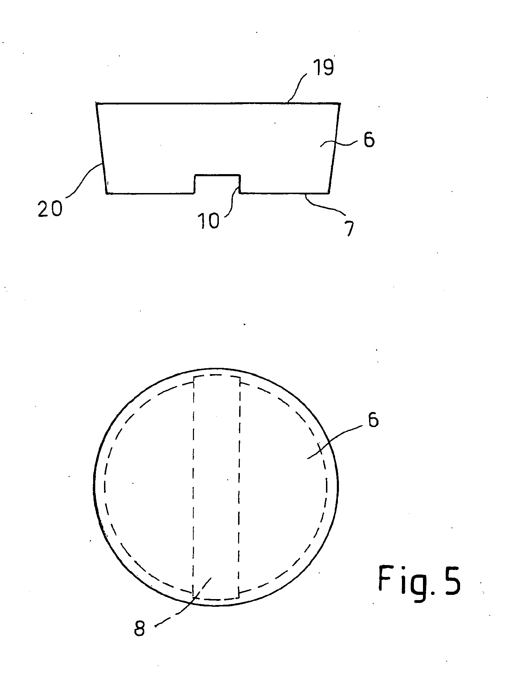

Die Schneidplatte 6 ist bevorzugt eine Rundschneidplatte, kann aber auch andere Geometrien aufweisen, die an ihrer zur Stützplatte 5 gewandten Unterseite 7 (siehe besonders Figur 5) eine Nut 10 aufweist. Bevorzugt besteht die Schneidplatte 6 aus einer Keramik, sie kann jedoch auch aus einem anderen Material, wie z. B. Metall bestehen. Die Schneidplatte 6 ist über eine Spannpratze 22 auf dem Klemmhalter 3 befestigt.

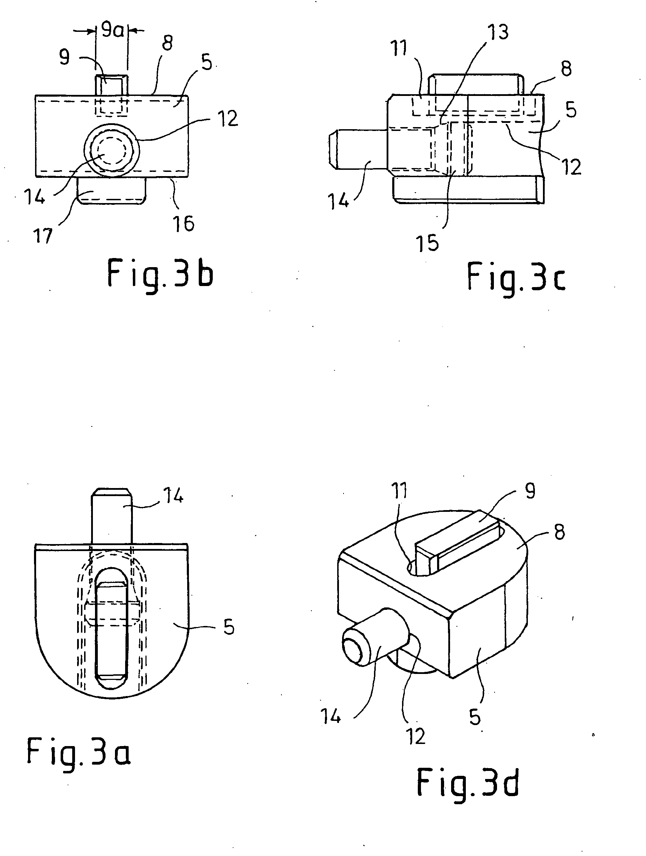

In einer Ausnehmung 4 des Klemmhalters 3 ist eine Stützplatte 5 eingesetzt, die im Einzelnen in Figur 3 gezeigt ist. Die Stützplatte 5 weist an ihrer zur Schneidplatte 6 gewandten Oberseite 8 eine Passfeder 9 auf, die mit ihrer Breite 9a an die Nut 10 in der Schneidplatte 6 angepasst ist.

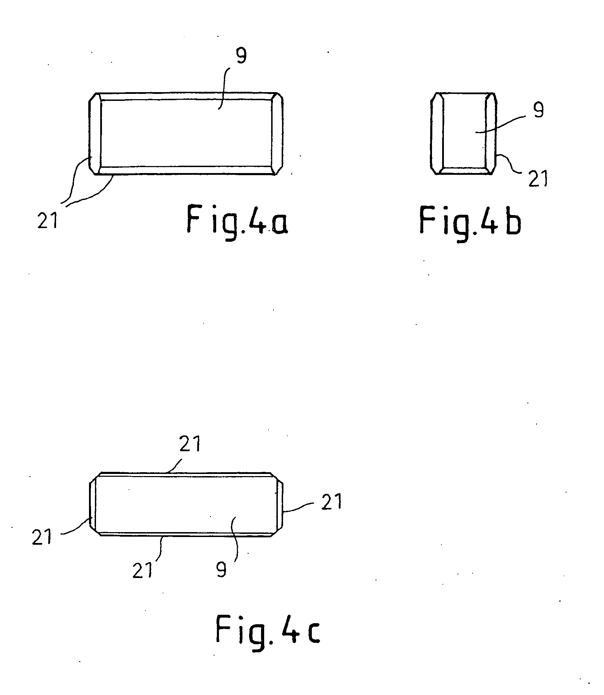

Bevorzugt ist die Passfeder 9 ein separates Bauteil (siehe Figur 4) und besteht aus einer Keramik.

In dieser bevorzugten Ausführungsform ist auf der Oberseite 8 der Stützplatte 5 ein Schlitz 11 eingebracht, in den die Passfeder 9 eingesetzt ist.

Die Stützplatte 5 ist auf dem Klemmhalter 3 verschraubt. Hierzu weist sie eine Bohrung 12 mit einer konischen Durchmesserverringerung 13 auf. In diese Bohrung 12 lässt sich eine Schraube 14 einsetzen, die mit ihrem Kopf 15 an der konischen Durchmesserverringerung 13 aufsitzt und mit ihrem Gewinde in ein passendes Gegengewinde im Klemmhalter 3 eingreift. Durch Festdrehen der Schraube 14 wird die Stützplatte 5 in ihren Plattensitz in der Ausnehmung 4 des Klemmhalters 3 gezogen.

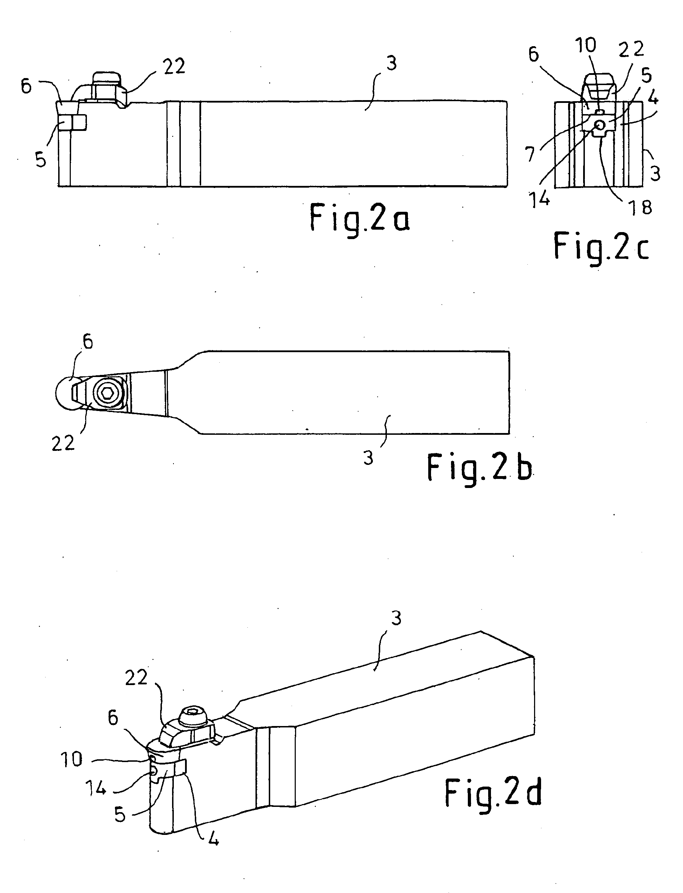

An ihrer zum Klemmhalter 3 gewandten Unterseite 16 weist die Stützplatte 5 einen Steg 17 auf, der in eine entsprechende Nut 18 im Klemmhalter 3 eingreift. Diese Nut 18 (siehe Figur 2 c) dient zur Führung der Stützplatte 5 auf dem Klemmhalter 3.

Die Stützplatte 6 (siehe Figur 5) ist in hier als Rundschneidplatte ausgeführt und ist mit einer planen Oberseite 19 versehen. Die Nut 10 an ihrer Unterseite 7 ist bevorzugt durchgängig ausgebildet. Vorzüglich eignet sich als Material für diese Schneidplatte 6 ein kubisches Bornitrid CBN. Sie kann aber auch aus einem anderen Material bestehen. Die Flanke 20 der Schneidplatte 6 ist bevorzugt konisch ausgebildet, wobei der Durchmesser der Schneidplatte 6 in Richtung zur Nut 10 abnimmt.

Die Passfeder 9 (siehe Figur 4) ist an ihren Kanten jeweils mit einer Fase 21 versehen und besteht bevorzugt aus einer Keramik.

## Patentansprüche

1. Schneidwerkzeug zur spanabhebenden Bearbeitung, im Wesentlichen bestehend aus einem Klemmhalter (3) mit einer Ausnehmung (4) zur Aufnahme einer Stützplatte (5) und mit einer Schneidplatte (6), die auf der Stützplatte (5) über eine Spannpratze (22) befestigt ist, wobei die Schneidplatte (6) über eine erste formschlüssige Nut-Feder-Verbindung auf der Stützplatte aufsitzt, die Stützplatte (5) über eine Schraube (14) auf dem Klemmhalter befestigt ist und durch Festdrehen der Schraube (14) die Stützplatte (5) in ihren Plattensitz in der Ausnehmung gezogen wird, **dadurch gekennzeichnet, dass** die Stützplatte (5) über eine zweite formschlüssige Nut-Feder-Verbindung auf dem Klemmhalter (3) aufsitzt und von vorne mit der Schraube (14) geschraubt wird und die zweite Nut-Feder-Verbindung parallel zur Achse der Schraube (14) angeordnet ist und die erste Nut-Feder-Verbindung der Schneidplatte (6) mit der Stützplatte (5) ebenfalls parallel zur Achse der Schraube (14) angeordnet ist.

2. Schneidwerkzeug nach Anspruch 1, **dadurch gekennzeichnet, dass** die Schneidplatte (6) auf ihrer zur Stützplatte (5) gewandten Unterseite (7) eine Nut (10) aufweist, in die eine Passfeder (9) formschlüssig eingreift, die entweder einstückig mit der Stützplatte (5) ausgebildet ist oder in oder an dieser befestigt ist.

3. Schneidwerkzeug nach Anspruch 2, **dadurch gekennzeichnet, dass** die zur Schneidplatte (6) gewandte Oberseite (8) der Stützplatte (5) einen Schlitz (11) aufweist, in den die Passfeder (9) als eigenständiges Bauteil formschlüssig eingesetzt ist.

4. Schneidwerkzeug nach Anspruch 2 oder 3, **dadurch gekennzeichnet, dass** die Passfeder (9) aus einer Keramik besteht.

5. Schneidwerkzeug nach Anspruch 1, **dadurch gekennzeichnet, dass** die Schneidplatte (6) auf der zur Stützplatte (5) gewandten Unterseite (7) eine erhabene Passfeder (9) aufweist, die in eine entsprechende Nut (11) auf der zur Schneidplatte (6) gewandten Oberseite (8) der Stützplatte (5) formschlüssig eingreift.

6. Schneidwerkzeug nach einem der Ansprüche 1 bis 5, **dadurch gekennzeichnet, dass** die Stützplatte (5) auf ihrer zum Klemmhalter (3) gewandten Unterseite (16) einen Steg (17) aufweist, der in eine entsprechende Nut (18) im Klemmhalter (3) eingreift oder umgekehrt.

7. Schneidwerkzeug nach einem der Ansprüche 1 bis 6, **dadurch gekennzeichnet, dass** das Material der Schneidplatte (6) eine Keramik oder ein kubisches Bornitrid ist.

## Claims

1. A cutting tool for machining processes, consisting essentially of a clamping holder (3) with a recess (4) for receiving a support plate (5), and with a cutting plate (6) which is secured to the support plate (5) by means of a clamping claw (22), wherein the cutting plate (6) is positioned on the support plate by means of a first interlocking tongue-and-groove connection, the support plate (5) is secured to the clamping holder by means of a screw (14), and the support plate (5) is pulled into its seating in the recess by tightening of the screw (14), **characterised in that** the support plate (5) is positioned on the clamping holder (3) by way of a second interlocking tongue-and-groove connection and is screwed from the front with the screw (14), and the second tongue-and-groove connection is arranged parallel to the axis of the screw (14), and the first tongue-and-groove connection of the cutting plate (6) with the support plate (5) is likewise arranged parallel to the axis of the screw (14).

2. A cutting tool according to Claim 1, **characterised in that** the cutting plate (6) has on its underside (7) oriented towards the support plate (5) a groove (10) in which a feather key (9) engages in a form-fitting manner, which feather key (9) is either formed integrally with the support plate (5) or is fastened therein or thereon.

3. A cutting tool according to Claim 2, **characterised in that** the upper side (8) of the support plate (5) oriented towards the cutting plate (6) has a slot (11) into which the feather key (9) is inserted in a form-fitting manner as a separate component.

4. A cutting tool according to Claim 2 or 3, **characterised in that** the feather key (9) is made of a ceramic material.

5. A cutting tool according to Claim 1, **characterised in that** the cutting plate (6) has on its underside (7) oriented towards the support plate (5) a raised feather key (9) which engages in a form-fitting manner in a corresponding groove (11) in the upper side (8) of the support plate (5) oriented towards the cutting plate (6).

6. A cutting tool according to any one of Claims 1 to 5, **characterised in that** the support plate (5) has on its underside (16) oriented towards the clamping holder (3) a tongue (17) which engages in a corresponding groove (18) in the clamping holder (3) or vice versa.

7. A cutting tool according to any one of Claims 1 to 6, **characterised in that** the material of the cutting plate (6) is a ceramic material or a cubic boron nitride.

## Revendications

1. Outil de coupe destiné à l'usinage par enlèvement de copeaux, constitué essentiellement d'un porte-plaquette (3) doté d'un évidement (4) pour recevoir une plaque d'appui (5) et d'une plaquette de coupe (6) qui est fixée à la plaque d'appui (5) à l'aide d'une griffe de serrage (22), la plaquette de coupe (6) reposant sur la plaque d'appui par l'intermédiaire d'un premier assemblage par rainure et languette à complémentarité de formes, la plaque d'appui (5) étant fixée par une vis (14) au porte-plaquette, et la plaque d'appui (5) étant tirée dans son logement de plaque, situé dans l'évidement, en serrant la vis (14), **caractérisé par le fait que** la plaque d'appui (5) repose sur le porte-plaquette (3) par l'intermédiaire d'un deuxième assemblage par rainure et languette à complémentarité de formes et est serrée de l'avant par la vis (14), et le deuxième assemblage par rainure et languette est disposé parallèlement à l'axe de la vis (14), et le premier assemblage par rainure et languette de la plaquette de coupe (6) avec la plaque d'appui (5) est également disposé parallèlement à l'axe de la vis (14).

2. Outil de coupe selon la revendication 1, **caractérisé par le fait que** la plaquette de coupe (6), sur sa face inférieure (7) tournée vers la plaque d'appui (5), présente une rainure (10) dans laquelle s'engage avec complémentarité de formes une languette d'ajustage (9) qui est soit réalisée d'une seule pièce avec la plaque d'appui (5), soit fixée dans ou sur celle-ci.

3. Outil de coupe selon la revendication 2, **caractérisé par le fait que** la face supérieure (8) de la plaque d'appui (5) qui est tournée vers la plaquette de coupe (6) présente une fente (11) dans laquelle la languette d'ajustage (9) est insérée avec complémentarité de formes, en tant qu'élément indépendant.

4. Outil de coupe selon la revendication 2 ou 3, **caractérisé par le fait que** la languette d'ajustage (9) est réalisée en céramique.

5. Outil de coupe selon la revendication 1, **caractérisé par le fait que** la plaquette de coupe (6), sur sa face inférieure (7) tournée ver la plaque d'appui (5), présente une languette d'ajustage (9) en saillie qui s'engage avec complémentarité de formes dans une rainure (11) correspondante prévue dans la face supérieure (8) de la plaque d'appui (5) qui est tournée vers la plaquette de coupe (6).

6. Outil de coupe selon une des revendications 1 à 5, **caractérisé par le fait que** la plaque d'appui (5), sur sa face inférieure (16) tournée vers le porte-plaquette (3), présente une nervure (17) qui s'engage dans une rainure (18) correspondante du porte-plaquette (3), ou inversement.

7. Outil de coupe selon une des revendications 1 à 6, **caractérisé par le fait que** le matériau de la plaquette de coupe (6) est une céramique ou un nitrure cubique de bore.
